# EUROPEAN PATENT SPECIFICATION

(11) **EP 3 864 983 B1**
(45) Date of publication and mention of the grant of the patent: **10.01.2024**
(21) Application number: 18941113.5
(22) Date of filing: 30.11.2018
(51) Int. Cl.: G05D 23/24, A24F 47/00

(54) **ELECTRONIC CIGARETTE CONTROL METHOD AND ELECTRONIC CIGARETTE**
STEUERUNGSVERFAHREN FÜR ELEKTRONISCHE ZIGARETTEN UND ELEKTRONISCHE ZIGARETTE
PROCÉDÉ DE COMMANDE DE CIGARETTE ÉLECTRONIQUE ET CIGARETTE ÉLECTRONIQUE

(43) Date of publication of application: 18.08.2021
(73) Proprietor: Zhongshan Shengyufeng Trading Co., Ltd., Xiaolan Town Zhongshan City (CN)
(72) Inventor: ZHU, Wei, Shenzhen, Guangdong 518118 (CN); WANG, Jian, Shenzhen, Guangdong 518118 (CN); ZHOU, Bo, Shenzhen, Guangdong 518118 (CN)
(74) Representative: Westphal, Mussgnug & Partner, Patentanwälte mbB
(86) International application number: PCT/CN2018/118524
(87) International publication number: WO 2020/107394

(56) References cited:
- WO-A1-2015/159107
- WO-A1-2017/075827
- CN-A- 106 509 998
- US-A1- 2017 164 658

## Description

### Technical Field

The present disclosure relates to the technical field of electronic cigarettes, in particularly, to an electronic cigarette control method and an electronic cigarette.

### Background

An electronic cigarette, as a substitute for a cigarette, is mainly used to simulate the feeling of smoking without affecting health. The electronic cigarette in the related art is mainly composed of two parts: an atomizer and a power supply assembly. The power supply assembly is connected with the atomizer to supply power to the atomizer to atomize cigarette oil for consumers to smoke. Generally, the power supply modes of the power supply assembly to the atomizer mainly has the follow modes: 1) a battery of the power supply assembly supplies the atomizer with a stable voltage output; 2) the battery of the power supply assembly supplies the atomizer with a constant power output; 3) the power supply assembly dynamically adjusts the output power by calculating the resistance change of a heating element of the atomizer, to realize a constant temperature output to the atomize to atomize the smoke oil. The first two output modes cannot control the atomization temperature of the heating element of the atomizer very well, which affects the suction experience of users. The latter output mode of calculating the resistance change of the atomizer requires that the atomizer is in a cooling state when connecting to the power supply assembly to avoid calculation errors, or requires that a initial resistance value is set by a key, which is cumbersome.

Publication CN106509998 discloses a temperature control method and a system of an electronic atomization apparatus and a system thereof. The temperature control method comprises the steps that a current resistance value of a heating wire is obtained, a target resistance value of the heating wire is obtained according to a normal-temperature initial resistance value, a resistance temperature coefficient and preset target temperature of the heating wire and the change speed of output voltage of the electronic atomization device is controlled according to the target resistance value and the current resistance value to adjust the temperature of the heating wire. The heating wire can be rapidly stabilized at the target temperature, accordingly mist stable in temperature is output, and user experience is good.

### Summary

A technical problem to be solved by the present disclosure is to provide an electronic cigarette control method and an electronic cigarette.

A technical solution adopted by the present disclosure to solve the technical problem is to provide an electronic cigarette control method having the features of claim 1, as well as an electronic cigarette having the features of claim 4.

The electronic atomizing device and the electronic cigarette according to the disclosure have the following beneficial effects: a temperature control of the electronic cigarette can be quickly achieved under the condition of saving a battery energy, meanwhile, a dry heating is prevented, and a static power consumption is reduced.

### Brief Description Of The Drawings

The disclosure will be further described with reference to the accompanying drawings and specific embodiments. In the drawings,
Fig. 1 is a program flow chart of an electronic cigarette control method in a first embodiment of the disclosure;
Fig. 2 is a program flow chart of an electronic cigarette control method in a second embodiment of the disclosure;
Fig. 3 is a program flow chart of an electronic cigarette control method in a third embodiment of the disclosure;
Fig. 4 is a logic block diagram of an electronic cigarette in one embodiment of the disclosure;
Fig. 5 is a first partial circuit schematic diagram of the electronic cigarette of the disclosure;
Fig. 6 is a second partial circuit schematic diagram of the electronic cigarette of the disclosure;
Fig. 7 is a third partial circuit schematic diagram of the electronic cigarette of the disclosure;
Fig. 8 is a fourth partial circuit schematic diagram of the electronic cigarette of the disclosure; and
Fig. 9 is a fifth partial circuit schematic diagram of the electronic cigarette of the disclosure.

### Description of The Embodiments

To clearly understand the technical features, objectives and effects of the disclosure, the specific embodiments of the disclosure will now be described in detail with reference to the accompanying drawings.

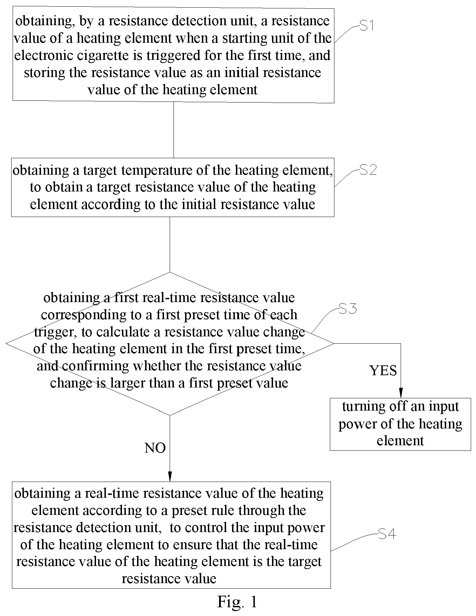

As shown in Fig. 1, an electronic cigarette control method in a first embodiment of the present disclosure includes the following steps: S 1, obtaining, by a resistance detection unit 50, a resistance value of a heating element 60 when a starting unit 40 of the electronic cigarette is triggered for the first time, and storing the resistance value as an initial resistance value of the heating element 60. Specifically, when the electronic cigarette is sucked for the first time, the starting unit 40 triggers the electronic cigarette to start power supply to the heating element 60, and the resistance value of the heating element 60 is obtained during the initial power supply. Herein, since that temperature of the heating element 60 has not yet started to rise, the temperature of the heating element 60 is approximately the normal temperature, and the corresponding resistance value of the heating element 60 is the resistance value corresponding to the normal temperature, which is stored as the initial resistance value to be used in the temperature rise calculation process.

S2, obtaining a target temperature of the heating element 60 to obtain a target resistance value of the heating element 60 according to the initial resistance value. Specifically, the heating element 60 used in the electronic cigarette generally has a stable temperature resistance characteristic, such as stainless steel 316, titanium, nickel, nichrome, etc. That is, if the temperature of the heating element 60 rises 1°C each, the resistance value of the heating body 60 changes correspondingly by f, wherein the f can be understood as a fixed resistance value or a function change. If the initial temperature is T1, the preset atomization target temperature is T2, and the measured initial resistance value of the atomizer is R1, then the expected target resistance value R2 =(T2-T1) * f + R1 can be calculated. According to the use environment of the electronic cigarette, T1 is usually the normal temperature, T2 can be an optimal atomization temperature of the atomizer, or can be a determined temperature.

S3, obtaining a first real-time resistance value corresponding to a first preset time of each trigger of the starting unit 40, so as to calculate a resistance value change of the heating element 60 within the first preset time, and determining whether the resistance value change is larger than a first preset value; if yes, turning off an input power of the heating element 60; if no, executing step S4. Specifically, during use of the electronic cigarette, in the first preset time Tn of a unit time at the initial stage of each suction, determining whether the resistance value rise of the heating element 60 is larger than the preset value, if yes, a dry heating is judged, and the input power to the heating element 60 is turned off. If no, a normal atomization is judged.

S4, obtaining a real-time resistance value of the heating element 60 by the resistance detection unit 50 according to a preset rule, to control the input power of the heating element 60 so that the real-time resistance value is the target resistance value. Specifically, when the initial resistance value of the heating element 60 of the atomizer is detected, the target resistance value to which the heating element 60 needs to be heated can be calculated. Controlling the input power of the heating element 60, so that the real-time resistance value of the heating element 60 and the expected target resistance value reach a dynamic balance, thereby realizing a constant temperature heating of the heating element 60 of the atomizer. Herein, the smaller the dynamic balance amplitude of the real-time resistance value and the target resistance value during the adjustment process is, the more accurate the constant temperature is.

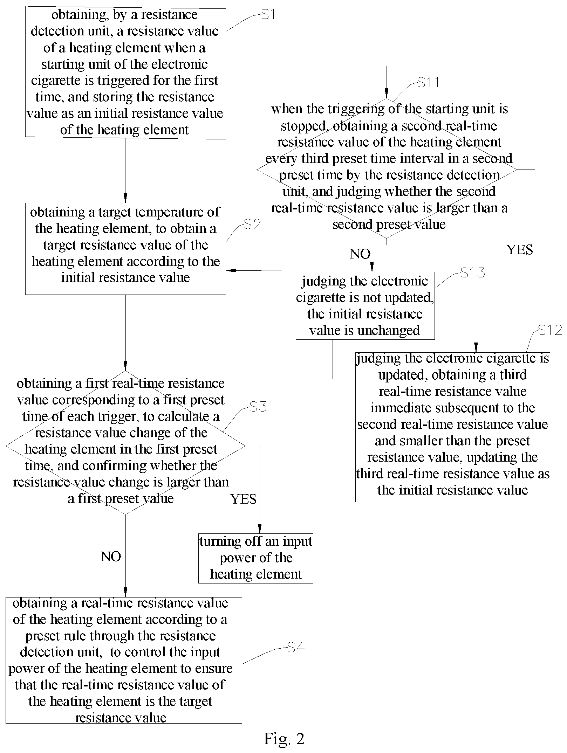

Further, in the embodiment shown in Fig. 2, the electronic cigarette control method of the present disclosure further includes:
S11, when the triggering of the starting unit 40 is stopped, obtaining, by the resistance detection unit 50, a second real-time resistance value of the heating element 60 at every third preset time interval within a second preset time, and determining whether the second real-time resistance value is larger than a second preset value; S12, if yes, judging that the electronic cigarette has been updated, acquiring a third real-time resistance value which is immediate subsequent to the second real-time resistance value and is smaller than the preset resistance value and updating the third real-time resistance value as the initial resistance value, and executing the step S2; S13, if no, judging that the electronic cigarette is not updated and the initial resistance value is unchanged, and executing the step S2. Specifically, when suction of the electronic cigarette is stopped, the resistance detection unit 50 continuously detects the resistance value of the atomizer for a period of time, that is, the second preset time Tf, for example, 1min or 2min. The time interval t2 between every two detections is the third preset time, and t2 is less than the time for disassembling and replacing the atomizer from the power supply assembly, for example, 1s. Herein, t2 can be reasonably set to reduce detection power consumption, and to detect whether there is a replacement atomizer from the power supply assembly. Since t2 is less than the atomizer replacement time, the power supply assembly can certainly detect that the resistance value of the heating element 60 is larger than the conventional resistance value at least one time, then the microprocessor 20 can determine that the atomizer has been replaced, the initial resistance value of the heating element 60 needs to be detected and obtained again. When judging that the atomizer replacement is completed by the resistance value, a normal resistance value detected by the resistance detection unit 50 for the first time is stored as the initial resistance value of the new heating element 60 so as to be called in a later process. The second preset time Tf is a period of time within which the electronic cigarette is not used when stopping suction, wherein the second preset time Tf is selected to be slightly larger than the time required for the atomizer to return to the normal temperature under the condition that the power supply assembly and the atomizer of the electronic cigarette are connected when the heating of the electronic cigarette is stopped. By the selected time, the battery energy of the electronic cigarette can be saved without affecting the intelligent detection effect.

Meanwhile, within the second preset time Tf, the detection unit continues to detect, the time interval between every two detections is the third preset time, and the third preset time is selected to be slightly less than the time required for replacing the atomizer of the electronic cigarette normally, to ensure that the battery energy can be saved as much as possible under the condition that the replacement of the atomizer can be detected intelligently, since the battery energy is consumed in each detection. Meanwhile, if the replacement of the atomizer is not detected within the second preset time Tf, the microprocessor 20 continues to use the stored initial resistance value, and controls the input power of the heating element 60 during the use of the electronic cigarette according to the initial resistance value. The static power consumption of the electronic cigarette can be reduced by reasonably setting the value of the second preset time Tf.

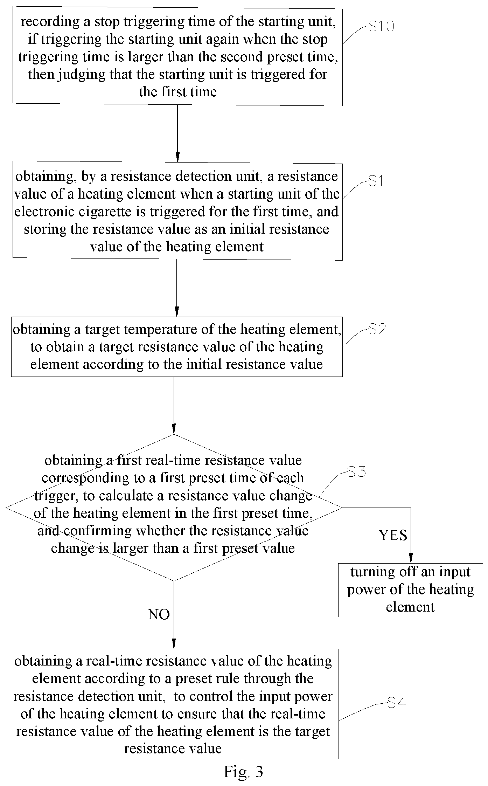

Furthermore, in the embodiment shown in Fig. 3, the electronic cigarette control method of the present disclosure further includes:
S10: recording a stop triggering time of the starting unit 40, and if triggering the starting unit 40 again when the stop triggering time is larger than the second preset time, then judging that the triggering unit 40 is triggered for the first time. Specifically, when the electronic cigarette is used again after stopping working, for example, the stopping working time is larger than the second preset time Tf, that is, when the starting unit 40 is triggered, it is determined that the starting unit 40 is triggered for the first time, and processing is performed according to the first trigger.

Furthermore, the electronic cigarette control method of the present disclosure further includes:
enabling the electronic cigarette to sleep when the stop triggering time is larger than the second preset time; if the starting unit 40 is triggered when the electronic cigarette is in the sleep state, then judging that the starting unit 40 is triggered for the first time.

Specifically, after the electronic cigarette stops working, for example, after the stopping suction time is larger than the second preset time Tf, the electronic cigarette can be set to sleep. In the sleep state of the electronic cigarette, the resistance detection unit 50 does not detect the resistance of the heating element 60. When the electronic cigarette is in the sleep state, the starting unit 40 can be triggered to end the sleep state of the electronic cigarette, and the trigger of the starting unit 40 is settled as a first trigger to obtain the initial resistance value of the heating element 60 to perform the above operation.

Furthermore, the electronic cigarette control method of the disclosure further includes: continuously detecting the real-time resistance value of the heating element when the starting unit is triggered, and judging whether the real-time resistance value is larger than a third preset value; if yes, turning off the input power of the heating element.

Specifically, in some embodiment, when the input power of the heating element is constant power input, an output voltage and an output current are continuously detected during the whole time that the starting unit is triggered. The resistance value of the heating element is calculated by the feedback microprocessor, and once reaches the third preset value, the output is stopped, so that the atomizer is prevented from dry heating.

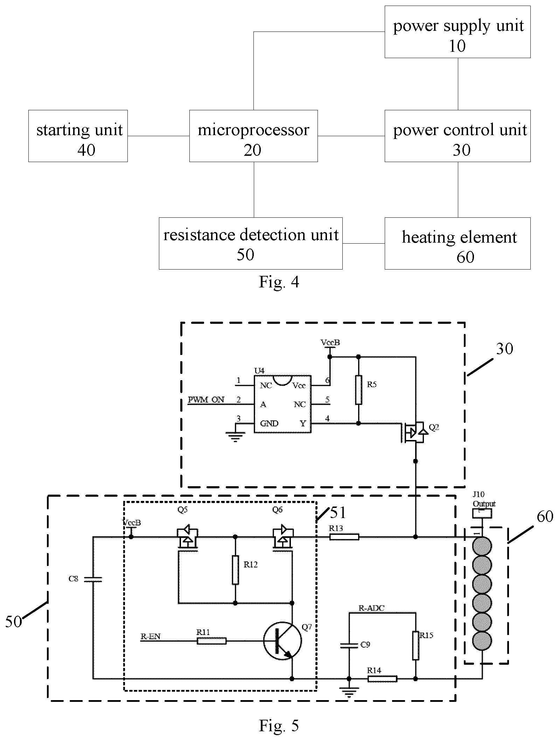

Furthermore, as shown in Fig. 4, an electronic cigarette of the present disclosure includes a power supply assembly, an atomizer, a heating element 60 disposed in the atomizer, and a power supply unit 10, a starting unit 40, a microprocessor 20, a power control unit 30 and a resistance detection unit 50 which are disposed in the power supply assembly.

The starting unit 40 is connected to the microprocessor 20 and configured to send a starting signal to the microprocessor 20 to trigger the microprocessor 20 to work. The resistance detection unit 50 is connected with the heating element 60 and the microprocessor 20, and is configured for detecting the real-time resistance value of the heating element 60 during the operation of the starting unit 40 and sending the real-time resistance value to the microprocessor 20. The microprocessor 20 is configured to store the real-time resistance value of the heating element 60 when the starting unit 40 is first triggered as an initial resistance value, and obtain a target resistance value of the heating element 60 when heating according to a target temperature and the initial resistance value of the heating element 60. The microprocessor 20 is connecte to the power control unit 30, and is configured for outputting a control signal to the power control unit 30 according to the real-time resistance value and the target resistance value of the heating element 60 so as to control the input power of the heating element 60. Specifically, when the electronic cigarette is sucked for the first time, the starting unit 40 triggers the electronic cigarette to start supplying power to the heating element 60, and when the power is initially supplied, the resistance value of the heating element 60 is obtained, wherein since the temperature of the heating element 60 has not yet started to rise, the temperature of the heating element 60 is approximately the normal temperature, and the corresponding resistance value of the heating element 60 is a resistance value corresponding to the normal temperature. The resistance value corresponding to the normal temperature is stored as an initial resistance value to be used in the calculation process of temperature rise. The heating element 60 used in the electronic cigarette generally has a stable temperature resistance characteristic, such as stainless steel 316, titanium, nickel, nichrome, etc. That is, if the temperature of the heating element 60 rises 1°C each, the resistance value of the heating body 60 changes correspondingly by f, wherein the f can be understood as a fixed resistance value or a function change. If the initial temperature is T1, the preset atomization target temperature is T2, and the measured initial resistance value of the atomizer is R1, then the expected target resistance value R2 =(T2-T1) * f + R1 can be calculated. According to the use environment of the electronic cigarette, T1 is usually the normal temperature, T2 can be an optimal atomization temperature of the atomizer, or can be a determined temperature. When the initial resistance value of the heating element 60 of the atomizer is detected, the target resistance value to which the heating element 60 needs to be heated can be calculated.

Controlling the input power of the heating element 60, so that the real-time resistance value of the heating element 60 and the expected target resistance value reach a dynamic balance, thereby realizing a constant temperature heating of the heating element 60 of the atomizer. Herein, the smaller the dynamic balance amplitude of the real-time resistance and the target resistance in the adjustment process is, the more accurate the constant temperature is. Further, during use of the electronic cigarette, in the first preset time Tn of a unit time at the initial stage of each suction, determining whether the resistance value rise of the heating element 60 is larger than the preset value. If yes, a dry heating is judged, and the input power of the heating element 60 is turned off. If no, a normal atomization is judged. It can be understood that the controlling the input power of the heating element by the power control unit includes increasing or decreasing or stopping the input power of the heating element, so that the heating temperature of the heating element reaches a dynamic balance.

Further, in the embodiment shown in Fig. 5, the resistance detection unit 50 includes a first sampling circuit, and a switch circuit 51 connected to the first sampling circuit. The switch circuit includes a field effect transistor Q5, a field effect transistor Q6 and a triode Q7. The D pole of the field effect transistor Q5 is connected with the D pole of the field-effect transistor Q6, and is connected with the C pole of the triode Q7 through a resistor R12. The G pole of the field effect transistor Q5 and the G pole of the field effect transistor Q6 are connected with the C pole of the triode Q7. The S pole of the field effect transistor Q6 is connected to a first end of the heating element 60 through a resistor R13. The B pole of the triode Q7 is connected to the microprocessor 20 through a resistor R11. The first sampling circuit includes a sampling resistor R14. One end of the sampling resistor R14 is connected with the E pole of the triode Q7 and is connected with the microprocessor through a capacitor C9, and another end of the sampling resistor R14 is connected with a second end of the heating element 60 and is connected with the microprocessor 20 through a resistor R15. Specifically, the field effect transistor Q5, the field effect transistor Q6 and the triode Q7 form the switch circuit, and the field effect transistor Q6 is configured to prevent a reverse conduction. The resistor R11, the resistor R12 and the resistor R13 are current-limiting resistors. An RC filter is formed by the resistor R15 and the capacitor C9 to feedback the voltage of the sampling resistance R14 to the microprocessor 20. The microprocessor 20 calculates the current flowing through the heating element 60 and the resistors R13 and R14, and further calculates the real-time resistance value of the heating element 60 according to the battery voltage. The microprocessor 20 outputs a R-EN signal to control the duration time of resistance detection and the interval time of multiple detections by controlling the B pole of the transistor Q7.

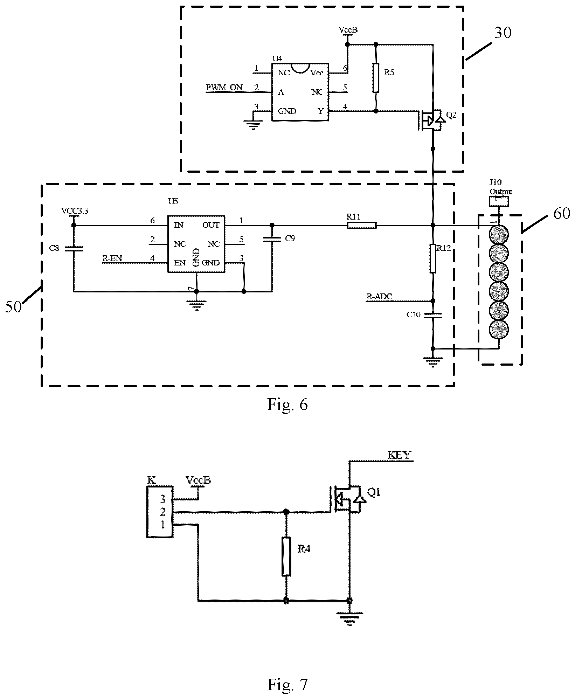

Further, in the embodiment shown in Fig. 6, the resistance detection unit 50 includes a voltage stabilizing unit and a second sampling unit connected to the voltage stabilizing unit. The voltage stabilizing unit includes a power chip U5, and the power chip U5 is connected with the first end of the heating element 60 through the resistor R11. The second sampling unit includes a sampling resistor R12, one end of the sampling resistor R12 is connected with the first end of the heating element 60, and another end of the sampling resistor R12 is connected with the microprocessor 20, and is grounded through a capacitor C10 and is connected to the second end of the heating element 60. Specifically, power is supplied to the heating element 60 through the voltage stabilizing chip U5, wherein the voltage stabilizing chip U5 can adopt TPS7A0968 or SGM2019. The resistor R11 is a current limiting and voltage dividing resistor, which can reduce detection power consumption. The capacitor C8 and the capacitor C9 are filter capacitors, and the resistor R12 and the capacitor C10 form an RC filter. The microprocessor 20 obtains a feedback signal of the heating element 60 to calculate the resistance value of the heating element 60, and outputs the R-EN signal according to the calculated resistance value to control the duration time of the resistance detection and the interval time of multiple detections.

Further, as shown in Fig. 7, the starting unit 40 includes a switch K and a field effect transistor Q1. A first pin of the switch K is connected to a power supply input, and a second pin of the switch K is connected to a G pole of the field effect transistor Q1. An S pole of the field effect transistor Q1 is connected to the microprocessor 20, and a D pole of the filed effect transistor Q1 is connected with the first pin of the switch K and is grounded. Specifically, the switch K can be a touch switch, an airflow sensor, an air pressure sensor, a touch sensing switch, etc. When the electronic cigarette is started, the switch K triggers the field effect transistor Q1 to be conducted, and a trigger signal KEY is generated to the microprocessor 20, and the microprocessor 20 controls the internal circuit of the electronic cigarette to start working.

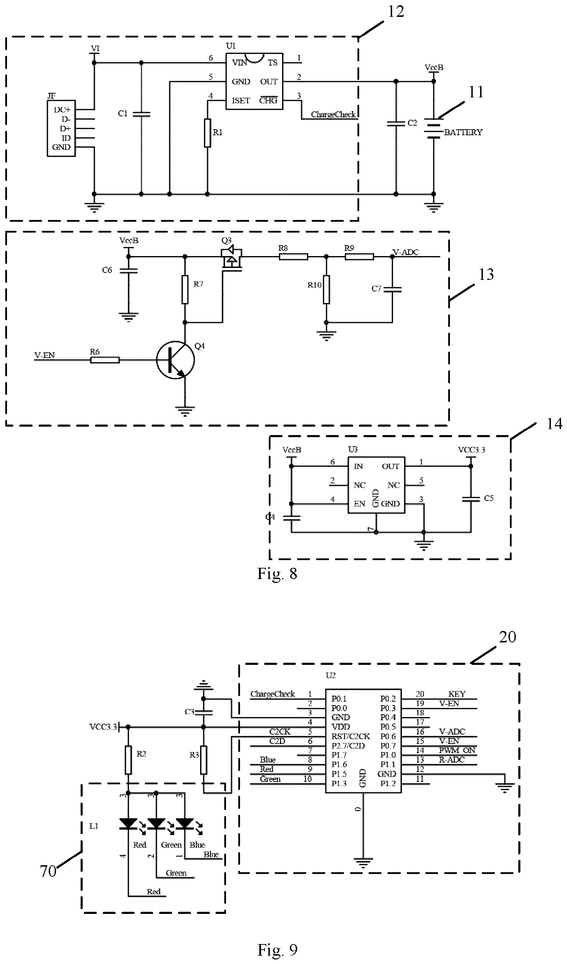

Further, as shown in Fig. 8, in an embodiment, the power supply unit 10 includes a battery 11, and a charging input unit 12, a voltage stabilizing unit 14 and a battery voltage detection unit 13 which are connected to the battery 11. The charging input unit 12 includes a connector JF and a charging management chip U1. An input pin of the charging management chip U1 is connected with a first pin of the connector JF, and an output pin of the charging management chip U1 is connected with the battery. In another embodiment, the battery voltage detection unit 13 includes a triode Q4 and a field effect transistor Q3. The S pole of the field effect transistor Q3 is connected with the battery, and the D pole of the field effect transistor Q3 is connected with the microprocessor 20 through resistors R8 and R9. The resistor R8 is grounded through a resistor R10. The C pole of the triode Q4 is connected with the battery through a resistor R7, the B pole of the triode Q4 is connected with the microprocessor 20 through a resistor R6, and the E pole of the triode Q4 is grounded. In another embodiment, the voltage stabilizing unit 14 includes a voltage stabilizing chip U3, an input end of the voltage stabilizing chip U3 is connected with the battery 11, and an output end of the voltage stabilizing chip U3 is connected with the microprocessor 20. Specifically, the charging input unit includes a MICRO USB/DC input structure, the charging management chip U1 includes a BQ21040, an SGM4056 or a BQ24040, and the charging management chip U1 sends a charging state to the microprocessor 20. In the battery voltage detection unit 13, the triode Q4 adopts an NPN type triode S8050, and the field effect transistor Q3 adopts an enhancement type field effect transistor P-MOSFET, and the output state of the battery is obtained by detecting and sampling the battery voltage, so as to perform corresponding operation on the battery as required. The resistor R6 and the resistor R7 are current-limiting resistors, the triode Q3 and the field effect transistor Q4 play a switching effect, the resistor and the resistor R8 and the resistor R10 carry out voltage division, and the resistor R9 and the capacitor C7 form an RC filter.

Further, in the embodiment shown in Fig. 5 and Fig. 6, the power control unit 30 includes a logic chip U4 and a field effect transistor Q2. A second pin of the logic chip U4 is connected to the microprocessor 20, a fourth pin of the logic chip U4 is connected to the G pole of the field effect transistor Q2. The D pole of the field effect transistor Q2 is connected to the first end of the heating element 60, and the S pole of the field effect transistor Q2 is connected with the battery. Specifically, the logic chip U4 adopts the SN74AUP1G04 to increase the driving current and voltage of the microprocessor 20. The field effect transistor Q2 adopts the P-MOSFET PB521BX. The resistor R5 is a current limiting resistor that limits the input current of the heating element 60.

Further, as shown in Fig. 9, a display unit 70 connected to the microprocessor 20 is further included. The display unit 70 may include an RGB-LED connected to the microprocessor 20. The state of the battery and the operation state of the electronic cigarette may be displayed by the display unit 70.

It should be understandable that the above embodiments are only preferred embodiments of the disclosure, and the description thereof is more specific and detailed, but it is not to be construed as limiting the scope of the patent of the disclosure. It should be noted that a person skilled in the art can freely combine the foregoing technical features and also can make several modifications and improvements without departing from the concept of the disclosure, and these modifications and improvements are all within the scope of protection of the present disclosure. Therefore, all equivalent transformations and modifications made according to the scope of the claims of the disclosure shall fall within the scope of the claims of the disclosure.

## Claims

1. An electronic cigarette control method, comprising the steps of:
S1, measuring, by a resistance detection unit (50), a resistance value of a heating element (60) when a starting unit (40) of the electronic cigarette triggers at a first time for heating the heating element (60) before the temperature of the heating element has started to rise, and storing the resistance value as an initial resistance value of the heating element (60), and executing step S11; whereby the starting unit (40) is connected with the heating element (60) through a microprocessor (20) and the resistance detection unit (50);
S11 stopping the triggering and, when the triggering of the starting unit (40) is stopped, measuring a second real-time resistance value of the heating element (60) every third preset time interval within a second preset time interval being larger than the third preset time interval by the resistance detection unit (50), several second real-time resistance values being measured, and judging whether the second real-time resistance value is larger than a second preset value; wherein the second preset time interval is greater than a time interval required for the heating element (60) to restore to its normal temperature after being heated; the third preset time interval is smaller than a time interval required for replacing and updating the heating element (60), the second preset value is a regular resistance value of the heating element (60) after the heating element (60) is heated;
S12, if yes, judging that the electronic cigarette has been updated, acquiring a third real-time resistance value which is immediate subsequent to the second real-time resistance value and is smaller than the preset resistance value, and updating the third real-time resistance value as the initial resistance value, and executing the step S2;
S13, if no, judging that the electronic cigarette is not updated, and keeping the initial resistance value unchanged, and executing the step S2.
S2, determining a target temperature of the heating element (60), and calculating a target resistance value of the heating element (60) based on the target temperature of the heating element (60) and the initial resistance value, and executing the step S3;
S3, from the second time of the triggering of the starting unit (40), measuring a first real-time resistance value of the heating element (60) corresponding to a first preset time interval of each trigger of the starting unit (40), and calculating a resistance value change of the heating element (60) in the first preset time interval, and determining whether the resistance value change is larger than a first preset value; if yes, turning off an input power of the heating element (60); if no, executing step S4;
and S4, measuring, by the resistance detection unit (50), a real-time resistance value of the heating element (60) based on a preset rule, and controlling the input power of the heating element (60) to ensure that the real-time resistance value of the heating element (60) is the target resistance value.

2. The electronic cigarette control method of claim 1, further comprising:
S10, recording a stop triggering time interval of the starting unit (40) during which the starting unit (40) keeps off before being triggered;
when the starting unit (40) is triggered, obtaining the stop triggering time interval and judging whether the stop triggering time interval is larger than the second preset time interval;
if the stop triggering time interval is larger than the second preset time interval, defining that the starting unit (40) is triggered for the first time as that in the step S1 and executing the step S1.

3. The electronic cigarette control method of claim 2, further comprising:
setting the electronic cigarette to sleep when the stop triggering time interval is larger than the second preset time interval, and if the starting unit (40) is triggered when the electronic cigarette is in the sleep state, then judging that the starting unit (40) is triggered for the first time; and
continuously detecting the real-time resistance value of the heating element (60) after the starting unit (40) is triggered, and judging whether the real-time resistance value is larger than a third preset value or not; if yes, turning off the input power of the heating element (60).

4. An electronic cigarette, comprising a power supply assembly, an atomizer, a heating element (60) disposed in the atomizer, and a power supply unit (10), a starting unit (40), a microprocessor (20), a power control unit (30) and a resistance detection unit (50) which are disposed in the power supply assembly;
the starting unit (40) is connected with the microprocessor (20) and is configured for sending a starting signal to the microprocessor (20) to turn on the microprocessor (20);
the resistance detection unit (50) is connected with the heating element (60) and the microprocessor (20), and is configured for detecting a real-time resistance value of the heating element (60) during a working process of the starting unit (40) and sending the real-time resistance value to the microprocessor (20);
the microprocessor (20) is connected with the power control unit (30);
**characterized in that** the resistance detection unit (50) and the microprocessor (20) are configured to perform the steps of the method of claim 1.

## Patentansprüche

1. Steuerungsverfahren für elektronische Zigaretten, umfassend die folgenden Schritte:
S1 Messen eines Widerstandswerts eines Heizelements (60) durch eine Widerstandserkennungseinheit (50), wenn eine Starteinheit (40) der elektronischen Zigarette das Heizelement (60) zum ersten Mal dazu auslöst, sich zu erhitzen, bevor die Temperatur des Heizelements beginnt, zu steigen,
und Speichern des Widerstandswerts als einen anfänglichen Widerstandswert des Heizelements (60) und Ausführen von Schritt S11, wobei
die Starteinheit (40) mit dem Heizelement (60) durch einen Mikroprozessor (20) und die Widerstandserkennungseinheit (50) verbunden ist;
S11, Stoppen des Auslösens und, wenn das Auslösen der Starteinheit (40) gestoppt ist,
Messen eines zweiten Echtzeitwiderstandswerts des Heizelements (60) jedes dritte voreingestellte Zeitintervall innerhalb eines zweiten voreingestellten Zeitintervalls, das größer ist als das dritte voreingestellte Zeitintervall, durch die Widerstandserkennungseinheit (50), wobei mehrere zweite Echtzeitwiderstandswerte gemessen werden, und Feststellen, ob der zweite Echtzeitwiderstandswert größer ist als ein zweiter voreingestellter Wert; wobei das zweite voreingestellte Zeitintervall größer ist als ein Zeitintervall, das für das Heizelement (60) erforderlich ist, um seine normale Temperatur nach dem Erhitzen widerherzustellen; wobei das dritte voreingestellte Zeitintervall kleiner ist als das Zeitintervall, das zum Ersetzen und Aktualisieren des Heizelements (60) erforderlich ist, wobei der zweite voreingestellte Wert ein regulärer Widerstandswert des Heizelements (60) nach dem Erhitzen des Heizelements (60) ist;
S12, falls ja, Feststellen, dass die elektronische Zigarette aktualisiert wurde, Erfassen eines dritten Echtzeitwiderstandswerts, der dem zweiten Echtzeitwiderstandswert direkt folgt und kleiner ist als der voreingestellte Widerstandswert, und
Aktualisieren des dritten Echtzeitwiderstandswert als den anfänglichen Widerstandswert und Ausführen von Schritt S2;
S13, falls nein, Feststellen, dass die elektronische Zigarette nicht aktualisiert wurde, und unverändertes Beibehalten des anfänglichen Widerstandswerts, und Ausführen von Schritt S2 S2, Bestimmen einer Solltemperatur des Heizelements (60) und Berechnen eines Sollwiderstandswerts des Heizelements (60) basierend auf der Solltemperatur des Heizelements (60) des anfänglichen Widerstandwerts, und Ausführen von Schritt S3;
S3, ab dem zweiten Mal, dass die Starteinheit (40) ausgelöst wird, Messen eines ersten Echtzeitwiderstandswerts des Heizelements (60), der einem ersten voreingestellten Zeitintervall jedes Auslösers der Starteinheit (40) entspricht, und Berechnen einer Widerstandwertänderung des Heizelements (60) in dem ersten voreingestellten Zeitintervall, und Bestimmen, ob die Widerstandswertänderung größer ist als ein erster voreingestellter Wert; falls ja, Abschalten einer Eingangsleistung des Heizelements (60); falls nein, Ausführen von Schritt S4;
und S4, Messen eines Echtzeitwiderstandswerts des Heizelements (60) durch die Widerstandserkennungseinheit (50) basierend auf einer voreingestellten Regel, und Steuern der Eingangsleistung des Heizelements (60) um sicherzustellen, dass der Echtzeitwiderstandswert des Heizelements (60) der Sollwiderstandswert ist.

2. Steuerungsverfahren für elektronische Zigaretten nach Anspruch 1, ferner umfassend:
S10, Aufzeichnen eines Auslösestoppzeitintervalls der Starteinheit (40), während der die Starteinheit (40) ausgeschaltet bleibt, bevor sie ausgelöst wird;
wenn die Starteinheit (40) ausgelöst wird, Erlangen des Auslösestoppzeitintervalls und Feststellen, ob das Auslösestoppzeitintervall größer als das zweite voreingestellte Zeitintervall ist;
wenn das Auslösestoppzeitintervall größer ist als das zweite voreingestellte Zeitintervall, Definieren, dass die Starteinheit (40) zum ersten Mal wie bei Schritt S1 ausgelöst wird, und Ausführen von Schritt S1.

3. Steuerungsverfahren für elektronische Zigaretten nach Anspruch 2, ferner umfassend:
Versetzen der elektronischen Zigarette in einen Ruhezustand, wenn das Auslösestoppzeitintervall größer ist als das zweite voreingestellte Zeitintervall, und wenn die Starteinheit (40) ausgelöst wird, wenn die elektronische Zigarette im Ruhezustand ist, dann Feststellen, dass die Starteinheit (40) zum ersten Mal ausgelöst wird; und
Fortgesetztes Erkennen des Echtzeitwiderstandswerts des Heizelements (60), nachdem die Starteinheit (40) ausgelöst wird, und Feststellen, ob der Echtzeitwiderstandswert größer als ein dritter voreingestellter Wert ist oder nicht; falls ja, Ausschalten der Eingangsleistung des Heizelements (60).

4. Elektronische Zigarette, umfassend eine Leistungsversorgungsanordnung, einen Zerstäuber, ein in dem Zerstäuber angeordnetes Heizelement (60) und eine Stromversorgungseinheit (10), eine Starteinheit (40), einen Mikroprozessor (20), eine Leistungssteuereinheit (30) und eine Widerstandserkennungseinheit (50), die in der Leistungsversorgungseinheit angeordnet sind;
wobei die Starteinheit (40) mit dem Mikroprozessor (20) verbunden ist und dazu konfiguriert ist, ein Startsignal an den Mikroprozessor (20) zu senden, um den Mikroprozessor (20) einzuschalten;
wobei die Widerstandserkennungseinheit (50) mit dem Heizelement (60) und dem Mikroprozessor (20) verbunden ist und dazu konfiguriert ist, einen Echtzeitwiderstandswert des Heizelements (60) während eines Arbeitsprozesses der Starteinheit (40) zu erkennen und den Echtzeitwiderstandswert an den Mikroprozessor (20) zu senden;
wobei der Mikroprozessor (20) mit der Leistungssteuereinheit (30) verbunden ist;
**dadurch gekennzeichnet, dass** die Widerstandserkennungseinheit (50) und der Mikroprozessor (20) dazu konfiguriert sind, die Schritte des Verfahrens nach Anspruch 1 auszuführen.

## Revendications

1. Procédé de commande de cigarette électronique, comprenant les étapes suivantes :
S1, la mesure, par une unité de détection de résistance (50), d'une valeur de résistance d'un élément chauffant (60) lorsqu'une unité de démarrage (40) de la cigarette électronique se déclenche à un premier moment pour le chauffage de l'élément chauffant avant que la température de l'élément chauffant (60) n'ait commencé à augmenter,
et le stockage de la valeur de résistance en tant que valeur de résistance initiale de l'élément chauffant (60), et l'exécution de l'étape S11 ; moyennant quoi
l'unité de démarrage (40) est connectée à l'élément chauffant (60) par l'intermédiaire d'un microprocesseur (20) et à l'unité de détection de résistance (50) ;
S11, l'arrêt du déclenchement et, lorsque le déclenchement de l'unité de démarrage (40) est arrêté,
la mesure d'une deuxième valeur de résistance en temps réel de l'élément chauffant (60) tous les trois intervalles de temps prédéfinis dans un deuxième intervalle de temps prédéfini étant supérieur au troisième intervalle de temps prédéfini par l'unité de détection de résistance (50), plusieurs deuxièmes valeurs de résistance en temps réel étant mesurées, et le fait d'évaluer si la deuxième valeur de résistance en temps réel est supérieure à une deuxième valeur prédéfinie valeur ; dans lequel le deuxième intervalle de temps prédéfini est supérieur à un intervalle de temps requis pour que l'élément chauffant (60) retrouve sa température normale après avoir été chauffé ; le troisième intervalle de temps prédéfini est inférieur à un intervalle de temps requis pour le remplacement et la mise à jour de l'élément chauffant (60), la deuxième valeur prédéfinie est une valeur de résistance régulière de l'élément chauffant (60) après le chauffage de l'élément chauffant (60) ;
S12, si oui, le fait d'évaluer que la cigarette électronique a été mise à jour, l'acquisition d'une troisième valeur de résistance en temps réel qui est immédiatement postérieure à la deuxième valeur de résistance en temps réel et qui est inférieure à la valeur de résistance prédéfinie, et
la mise à jour de la troisième valeur de résistance en temps réel en tant que valeur de résistance initiale, et l'exécution de l'étape S2 ;
S13, si non, le fait d'évaluer que la cigarette électronique n'est pas mise à jour, et le maintien de la valeur de résistance initiale inchangée, et l'exécution de l'étape S2, S2, la détermination d'une température cible de l'élément chauffant (60), et le calcul d'une valeur de résistance cible de l'élément chauffant (60) sur la base de la température cible de l'élément chauffant (60) et de la valeur de résistance initiale, et l'exécution de l'étape S3 ;
S3, à partir du second moment du déclenchement de l'unité de démarrage (40), la mesure d'une première valeur de résistance en temps réel de l'élément chauffant (60) correspondant à un premier intervalle de temps prédéfini de chaque déclenchement de l'unité de démarrage (40),
et le calcul d'un changement de valeur de résistance de l'élément chauffant (60) dans le premier intervalle de temps prédéfini, et le fait de déterminer si le changement de valeur de résistance est supérieur à une première valeur prédéfinie ; si oui, l'extinction d'une puissance d'entrée de l'élément chauffant (60) ; si non, l'exécution de l'étape S4 ;
et S4, la mesure, par l'unité de détection de résistance (50), d'une valeur de résistance en temps réel de l'élément chauffant (60) sur la base d'une règle prédéfinie, et la commande de la puissance d'entrée de l'élément chauffant (60) pour garantir que la puissance en temps réel de la valeur de résistance en temps réel de l'élément chauffant (60) est la valeur de résistance cible.

2. Procédé de commande de cigarette électronique selon la revendication 1, comprenant en outre :
S10, l'enregistrement d'un intervalle de temps d'arrêt de déclenchement de l'unité de démarrage (40) pendant lequel l'unité de démarrage (40) reste à l'arrêt avant d'être déclenchée ;
lorsque l'unité de démarrage (40) est déclenchée, l'obtention de l'intervalle de temps d'arrêt de déclenchement et le fait d'évaluer si l'intervalle de temps d'arrêt de déclenchement est supérieur au deuxième intervalle de temps prédéfini ;
si l'intervalle de temps d'arrêt de déclenchement est supérieur au deuxième intervalle de temps prédéfini, le fait de définir que l'unité de démarrage (40) est déclenchée pour la première fois comme celle de l'étape S1 et l'exécution de l'étape S1.

3. Procédé de commande de cigarette électronique selon la revendication 2, comprenant en outre :
la mise de la cigarette électronique en veille lorsque l'intervalle de temps d'arrêt de déclenchement est supérieur au deuxième intervalle de temps prédéfini, et si l'unité de démarrage (40) est déclenchée lorsque la cigarette électronique est dans l'état de veille, alors le fait d'évaluer que l'unité de démarrage (40) est déclenchée pour la première fois ; et
la détectection en continu de la valeur de résistance en temps réel de l'élément chauffant (60) après le déclenchement de l'unité de démarrage (40), et le fait d'évaluer si la valeur de résistance en temps réel est supérieure à une troisième valeur prédéfinie ; si oui, l'extinction de la puissance d'entrée de l'élément chauffant (60).

4. Cigarette électronique, comprenant un ensemble d'alimentation électrique, un atomiseur, un élément chauffant (60) disposé dans l'atomiseur, et une unité d'alimentation électrique (10), une unité de démarrage (40), un microprocesseur (20), une unité de commande de puissance (30) et une unité de détection de résistance (50) qui sont disposés dans l'ensemble d'alimentation électrique ;
l'unité de démarrage (40) est connectée au microprocesseur (20) et est configurée pour l'envoi d'un signal de démarrage au microprocesseur (20) pour mettre sous tension le microprocesseur (20) ;
l'unité de détection de résistance (50) est connectée à l'élément chauffant (60) et au microprocesseur (20), et est configurée pour la détection d'une valeur de résistance en temps réel de l'élément chauffant (60) pendant un processus de travail de l'unité de démarrage (40) et l'envoi de la valeur de résistance en temps réel au microprocesseur (20) ;
le microprocesseur (20) est connecté à l'unité de commande de puissance (30) ;
**caractérisé en ce que** l'unité de détection de résistance (50) et le microprocesseur (20) sont configurés pour effectuer les étapes du procédé selon la revendication 1.
